# EUROPÄISCHE PATENTSCHRIFT

(11) **EP 1 278 051 B1**
(45) Veröffentlichungstag und Bekanntmachung des Hinweises auf die Patenterteilung: **23.04.2008**
(21) Anmeldenummer: 02012842.7
(22) Anmeldetag: 10.06.2002
(51) Int. Cl.: G01J 5/08, G08B 13/193

(54) **Linsenanordnung für Bewegungssensor**
Lens assembly for movement sensor
Ensemble de lentilles pour senseur de mouvement

(30) Priorität: 16.07.2001 DE 10134565
(43) Veröffentlichungstag der Anmeldung: 22.01.2003
(73) Patentinhaber: Zumtobel Lighting GmbH, 6850 Dornbirn (AT)
(72) Erfinder: Werner, Walter, Dr., 6850 Dornbirn (AT); Geiginger, Joachim, Dipl.-Ing., 6845 Hohenems (AT)
(74) Vertreter: Schmidt-Evers, Jürgen

(56) Entgegenhaltungen:
- EP-A- 0 080 114
- EP-A- 0 542 170
- EP-A- 0 666 551
- US-A- 5 187 360
- PATENT ABSTRACTS OF JAPAN vol. 1998, no. 01, 30. Januar 1998 (1998-01-30) & JP 09 230060 A (MATSUSHITA ELECTRIC WORKS LTD), 5. September 1997 (1997-09-05)
- PATENT ABSTRACTS OF JAPAN vol. 015, no. 103 (P-1178), 12. März 1991 (1991-03-12) & JP 02 311779 A (MATSUSHITA ELECTRIC WORKS LTD), 27. Dezember 1990 (1990-12-27)

## Beschreibung

Die vorliegende Erfindung betrifft einen Bewegungssensor nach dem Oberbegriff des Anspruches 1.

Bewegungs- oder Anwesenheitssensoren werden außer zu Überwachungszwecken oftmals auch zur automatischen Steuerung von in einem Raum angeordneten Aktoren, wie beispielsweise Beleuchtungseinrichtungen, Heizungseinrichtungen, Klimaanlagen oder dgl. - verwendet. Diese Sensoren dienen z.B. dazu, die Anwesenheit einer Person innerhalb eines Raumes festzustellen und anhängig davon die Beleuchtung oder Temperaturregelung in dem Raum einzustellen. Auch zur automatischen Aktivierung von Türen oder Rolltreppen finden Sensoren Verwendung.

Hierbei ist zu unterscheiden zwischen sog. aktiven und passiven Sensoren. Aktive Sensoren erzeugen selbst ein Signal und überprüfen, ob dieses Signal durch ein in dem Detektionsbereich des Sensors befindliches Objekt beeinflußt wird. Hierunter fallen beispielsweise Lichtschranken. Im Gegensatz dazu erfassen passive Sensoren die von einem zu erkennenden Objekt erzeugten Signale, sie senden selbst allerdings keine Signale aus.

Die vorliegende Anmeldung betrifft sog. Passive Infrarot-Sensoren (PIR- bzw. Passiv-Infrared-Sensoren). Diese erfassen die von Objekten emittierte Infrarotstahlung und weisen hierfür ein oder mehrere infrarot-empfindliche Sensorelemente sowie eine davor angeordnete Linsenanordnung auf. Die Linsenanordnung bildet den von dem Sensor erfaßten Detektionsbereich auf das infrarot-empfindliche Sensorelement ab, wobei durch eine Überwachung des zeitlichen Verlaufs des Sensorsignales die Anwesenheit einer sich bewegenden Person festgestellt wird.

Es sind Anwesenheits- oder Präsenzsensoren bekannt, deren Aufgabe darin besteht, die Anwesenheit oder Bewegung einer Person innerhalb eines Raumes zu erkennen. Hierzu sind die Sensoren beispielsweise an einer Decke des Raumes angeordnet, wobei mit Hilfe einer an der Vorderseite des Sensors angeordneten kalottenförmigen Linsenanordnung der von dem Sensor zu überwachende Bereich auf ein infrarotempfindliches Sensorelement abgebildet wird. Diese bekannten Sensoren haben allerdings die Eigenschaft, daß sie für naheliegende Bereiche eine größere Empfindlichkeit aufweisen als für entferntere Bereiche, d.h., daß die räumliche Auflösung für Bereiche unterhalb des Sensors wesentlich feiner ist als für Randbereiche des Raumes.

Modernere Bewegungssensoren sind aus den Veröffentlichungen JP 09 230060 A, US 5,187,360, JP 02 311779 A, EP 0 542 170 A2 und EP 0 666 551 A1 bekannt. Diese Sensoren sind derart ausgestaltet, dass sie auch entfernter liegende Objekte mit einer gewissen Zuverlässigkeit zu detektieren vermögen. Diese Eigenschaft wird durch unterschiedlichste Maßnahmen erreicht, welche zum Teil sehr aufwendig sind und sich in den Produktionskosten für die Sensoren niederschlagen.

Der vorliegenden Erfindung liegt deshalb die Aufgabe zugrunde, einen neuartigen Sensor anzugeben, bei dem auch die Anwesenheit von Infrarot-Strahlung emittierenden Objekten in entfernter liegender Bereichen zuverlässig erkannt werden kann, wobei diese vorteilhafte Eigenschaft des Sensors auf einfache Weise erreicht werden soll.

Diese Aufgabe wird durch einen Bewegungssensor, der die Merkmale des Anspruches 1 aufweist, gelöst.

Durch die erfindungsgemäße Maßnahme wird gewährleistet, daß von dem Bewegungssensor entferntere Objekte mit der gleichen Zuverlässigkeit erkannt werden können, wie sich unmittelbar in der Nähe des Bewegungssensors befindende Objekte.

Der von dem Bewegungssensor erfaßte Detektionsbereich ist im wesentlichen rechteckig, vorzugsweise quadratisch.

Im folgenden soll die Erfindung anhand der beiliegenden Zeichnung näher erläutert werden. Es zeigen:
- Fig. 1: den erfindungsgemäßen Bewegungssensor in perspektivischer Darstellung;
- Fig. 2: eine erste Variante einer erfindungsgemäßen Linsenanordnung in Aufsicht;
- Fig. 3: eine zweite Variante einer Linsenanordnung in perspektivischer Darstellung; und
- Fig. 4: eine schematische Darstellung des Infrarot-Sensors mit zwei davor angeordneten Linsen.

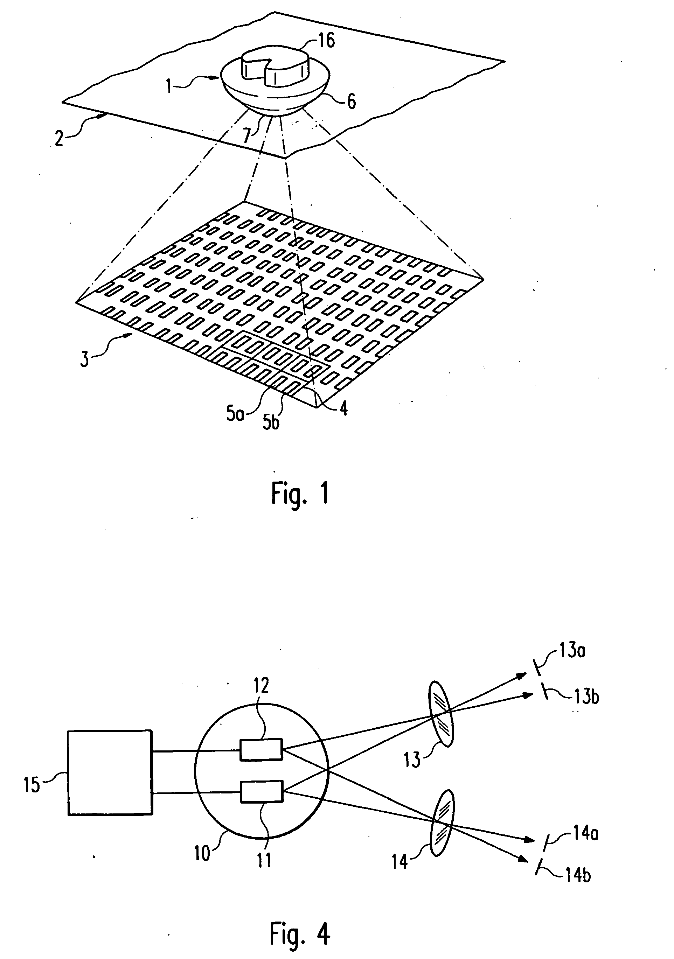

Der Bewegungssensor 1 ist in dem in Fig. 1 dargestellten Beispiel an der Decke 2 eines zu überwachenden Raumes befestigt. Bestandteil des Bewegungssensors 1 ist ein Sensorgehäuse 16, welches in der Decke 2 versenkt angeordnet ist und einen noch später ausführlicher beschriebenen IR-empfindlichen Sensor sowie die weitere Elektronik des Bewegungssensors 1 beinhaltet. An der Vorder- bzw. Unterseite des Gehäuses 16 befindet sich eine kalottenförmige Abdeckung 6 mit einer Linsenanordnung 7, die den Detektionsbereich 3 auf den infrarot-empfindlichen Sensor abbildet.

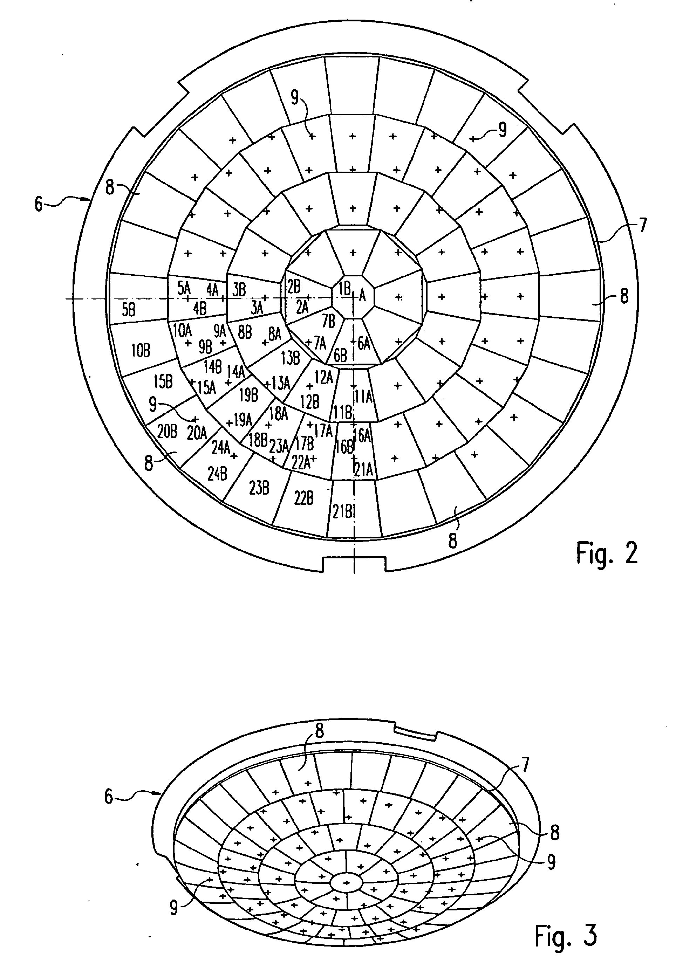

Im dargestellten Beispiel ist der von dem Bewegungssensor 1 erfaßte Detektionsbereich 3 quadratisch, was durch eine besondere Ausgestaltung der Linsenanordnung 7 erreicht wird. Dies soll im folgenden anhand der Fig. 2 und 3 erläutert werden, die zwei Varianten einer Linsenanordnung 7 zeigen.

Beide Linsenanordnungen 7 sind dabei in eine Vielzahl von Einzelfeldern unterteilt, die jeweils eine einzelne Linse 8 bilden. Die gesamte dom- bzw. kuppelförmige Linsenanordnung 7 besteht aus einem infrarot-transparenten Kunststoff, wobei die einzelnen Linsen 8 als sog. Fresnel-Linsen ausgebildet sind.

Die Anordnung und Ausgestaltung der einzelnen Linsen 8 ist derart, daß sie jeweils einen Teilbereich 4 des gesamten Detektionsbereichs 3 des Bewegungssensors 1 auf den IR-empfindlichen Sensor abbilden, was in Fig. 1 dargestellt ist. Insbesondere ist zu beachten, daß die Teilbereiche 4 aufgrund der Ausgestaltung der Linsenanordnung innerhalb des Detektionsbereichs 3 gleichmäßig verteilt angeordnet sind und jeweils die gleiche Größe aufweisen. Ein Teilbereich 4 ist darüber hinaus nochmals in zwei Ausschnitte 5a, 5b unterteilt, wobei der Bewegungssensor 1 derart ausgebildet ist, daß die Bewegung eines Wärmestrahlung emittierenden Objekts von einem Ausschnitt 5a in den anderen Ausschnitt 5b des Teilbereichs 4 erkannt wird.

Um die in Fig. 1 dargestellte gleichmäßige Abbildung der Teilbereiche 3 auf den IR-empfindlichen Sensor zu erzielen, sind die einzelnen Linsen 8 der Linsenanordnung 7 in um das Zentrum der Linsenanordnung 7 konzentrisch verlaufenden Kreisen angeordnet, wobei die Anordnung für jedes Viertel der Linsenanordnung 7 symmetrisch ist. Darüber hinaus ist von Bedeutung, daß die Linsen 8 entsprechend ihrer Anordnung unterschiedlich gestaltet sind. Insbesondere ist der Querschnitt der Linsen 8 derart, daß die mit einem Kreuz dargestellten optischen Zentren 9 aller Linsen 8 in Aufsicht betrachtet in einer gleichmäßigen Gitterstruktur, die der Anordnung der Teilbereiche 4 entspricht, angeordnet sind. Als das optische Zentrum einer Linse wird dabei der Punkt verstanden, in dem sich alle Strahlen schneiden, die vor und nach der Linse die gleiche Richtung haben.

Die Zuordnung der optischen Zentren zu den Linsen kann Fig. 2 entnommen werden, bei der die in dem unteren linken Viertel angeordneten Linsen und optischen Zentren gesondert numeriert sind. Die einzelnen Linsen werden dabei zusätzlich mit einem "B" bezeichnet, während an die Nummern für die optischen Zentren zusätzlich ein "A" angefügt wurde. Beispielsweise ist das optische Zentrum 10A der in dem äußeren Ring befindlichen Linse 10B derart zum Zentrum der Linsenanordnung 7 hin verschoben, daß es sich bereits in dem Bereich der Linse 9B befindet. Die Verschiebung der optischen Zentren aller Linsen ist derart, daß sich letztendlich die regelmäßige Anordnung der optischen Zentren ergibt, wodurch die erfindungsgemäße gleichmäßige Aufteilung des Detektionsbereichs erhalten wird.

Bei der in Fig. 2 in Aufsicht dargestellten ersten Variante der Linsenanordnung 7 besitzen alle Einzellinsen 8 mit Ausnahme der in der Mitte angeordneten Linse eine Trapezform, die mittlere Linse ist hingegen achteckig. Die in Fig. 3 perspektivisch dargestellte zweite Variante unterscheidet sich von der ersten Variante dadurch, daß die einzelnen Linsen 8 abgerundete Außenseiten haben und die in Zentrum angeordnete Linse kreisförmig ist. Die Anordnung der Linsen 8 in konzentrischen Kreisen ist allerdings bei beiden Varianten identisch. Ferner sind auch bei der Variante in Fig. 3 die einzelnen Linsen 8 derart ausgebildet, daß ihre optischen Zentren 9 in einem gleichmäßigen Gitter auf der sphärischen Oberfläche angeordnet sind.

Fig. 4 zeigt schematisch den Aufbau des Infrarot-Sensors 10 sowie dessen Zusammenwirken mit zwei davor angeordneten Linsen 13 und 14. Der Infrarot-Sensor 10 besteht aus zwei nebeneinander angeordneten infrarot-empfindlichen Sensorelementen 11 und 12. Die vor dem Sensor 10 angeordnete Linse 13 bildet dann - wie dargestellt - zwei benachbarte Bereiche 13a und 13b auf den Infrarot-Sensor 10 ab, insbesondere den Bereich 13a auf das untere Sensorelement 11 und den Bereich 13b auf das obere Sensorelement 12. Beide Bereiche 13a und 13b stellen die zwei Ausschnitte 5a, 5b eines in Fig. 1 dargestellte Teilbereichs 4 dar. Die von den beiden Sensorelementen 10 und 11 erfaßten Signale werden einer Auswerteeinheit 15 zugeführt, wobei beispielsweise das Sensorelement 11 ein positives Signal und das Sensorelement 12 ein negatives Signal erzeugt. Befindet sich dann eine die Infrarot-Strahlung emittierende Lichtquelle in dem Teilbereich 13a, so erzeugt der Sensor 10 insgesamt ein positives Signal. Bewegt sich die IR-Quelle nun von dem Teilbereich 13a in den Teilbereich 13b, so fällt das Sensorsignal von einem Maximalwert auf einen Minimalwert. Diese Änderung des Signals wird von der Auswerteeinheit 15 als Bewegung bzw. Anwesenheit eines Wärmestrahlung emittierenden Objekts in dem durch die Ausschnitte 13a, 13b gebildeten Teilbereich des Detektionsbereichs interpretiert. In gleicher Weise wird durch die Linse 14 die Anwesenheit bzw. Bewegung eines in dem durch die Bereich 14a, 14b gebildeten Teilbereichs befindlichen Objekts erfaßt. Diese Funktionsweise eines derartigen passiven Infrarot-Detektors (PIR-Detektors) ist allgemein bekannt und wird daher nicht weiter erläutert.

Wesentlich ist, daß die Linsen 9 der Linsenanordnung 7 derart angeordnet und ausgebildet sind, daß - wie in Fig. 1 dargestellt ist - die den einzelnen Linsen zugeordneten Teilbereiche 4 innerhalb des Detektionsbereiches 3 gleichmäßig verteilt angeordnet sind. Dies bedeutet, jede Linse 9 bildet grundsätzlich einen gleich großen Teilbereich 4 des gesamten Detektionsbereichs 3 auf dem Infrarot-Sensor ab. Hierdurch wird erreicht, daß die räumliche Auflösung des Sensors 1 über den gesamten Detektionsbereich 3 im wesentlichen konstant ist. Die Linsen können ferner derart ausgestaltet sein, daß die Sensitivität des Sensors 1 für jeden Teilbereich 4 im wesentlichen gleich groß ist. D.h., die von dem Infrarot-Sensor 10 erzeugten Signale sind grundsätzlich gleich hoch, unabhängig davon, ob sich die Quelle, die die Wärmestrahlung emittiert, in einem Teilbereich 4 befindet, der direkt unterhalb des Sensors 1 angeordnet ist oder in einem Teilbereich, der am Rand des Detektionsbereichs 3 liegt. Hierdurch wird ein Bewegungssensor mit einer über den gesamten Erfassungsbereich homogenen Auflösung erzielt.

Die vorliegende Erfindung zeichnet sich dadurch aus, daß die angestrebte homogene Auflösung des Bewegungssensors über seinen gesamten Detektionsbereich lediglich durch eine geeignete Ausgestaltung der Linsenanordnung erzielt wird. Hierdurch wird durch eine verhältnismäßig einfach durchzuführende Maßnahme eine optimale und zuverlässige Funktionsweise des Bewegungssensors erreicht.

## Patentansprüche

1. Bewegungssensor (1) zum Erfassen der Bewegung bzw. Anwesenheit von Wärmestrahlung emittierenden Objekten, aufweisend
zumindest zwei Infrarotsensoren (10) zum Erfassen einer innerhalb eines Detektionsbereiches (3) des Bewegungssensors (1) emittierten Infrarotstrahlung,
eine an die Infrarotsensoren (10) angeschlossene Auswerteeinheit (15) zum Auswerten der von den Infrarotsensoren (10) erfaßten Signale und
eine vor den Infrarotsensoren (10) angeordnete, kuppelförmige Linsenanordnung (7) mit einer Vielzahl von Linsen (8), die in um das Zentrum der Linsenanordnung (7) konzentrisch verlaufenden Kreisen angeordnet sind und jeweils einen bestimmten Teilbereich (4) des Detektionsbereichs (3) auf die Infrarotsensoren (10) abbilden,
wobei die optischen Zentren (9) der Linsen (8) derart zum Zentrum der Linsenanordnung (7) hin verschoben sind, daß das optische Zentrum wenigstens einer in einem äußeren Ring der Linsenanordnung (7) befindlichen Linse (8) sich bereits in dem Bereich einer weiter innen liegenden Linse (8) befindet und daß die optischen Zentren (9) in Aufsicht betrachtet in einer gleichmäßigen Gitterstruktur angeordnet sind und dementsprechend die räumliche Auflösung des Bewegungssensors (1) im wesentlichen über den gesamten Detektionsbereich (3) konstant ist.

2. Bewegungssensor nach Anspruch 1,
**dadurch gekennzeichnet,**
**daß** die von den Linsen (8) auf den Infrarotsensor (10) abgebildeten Teilbereiche (4) innerhalb des Detektionsbereichs (3) gleichmäßig verteilt angeordnet sind.

3. Bewegungssensor nach einem der vorherigen Ansprüche,
**dadurch gekennzeichnet,**
**daß** der Detektionsbereich (3) im wesentlichen rechteckig ist.

4. Bewegungssensor nach Anspruch 3,
**dadurch gekennzeichnet,**
**daß** der Detektionsbereich (3) im wesentlichen quadratisch ist.

5. Bewegungssensor nach einem der vorherigen Ansprüche,
**dadurch gekennzeichnet,**
**daß** die Linsen (8) der Linsenanordnung (7) durch Fresnel-Linsen gebildet werden.

6. Bewegungssensor nach einem der vorherigen Ansprüche,
**dadurch gekennzeichnet,**
**daß** die Linsenanordnung (7) aus IR-transparentem Kunststoff besteht.

7. Bewegungssensor nach einem der vorherigen Ansprüche,
**dadurch gekennzeichnet,**
**daß** der Infrarotsensor durch zwei nebeneinander angeordnete infrarotempfindliche Sensorelemente (11, 12) gebildet wird, wobei jede Linse (9) der Linsenanordnung (7) jeweils einen Ausschnitt (5a, 5b) eines Teilbereichs (4) auf ein Sensorelement (11, 12) abbildet.

8. Bewegungssensor nach einem der vorherigen Ansprüche,
**dadurch gekennzeichnet,**
**daß** die Linsenanordnung (7) in einer kalottenförmigen Abdeckung (6) des Infrarotsensors (1) angeordnet ist.

9. Bewegungssensor nach einem der vorherigen Ansprüche,
**dadurch gekennzeichnet,**
**daß** die Linsen (8) im wesentlichen trapezförmig sind.

## Claims

1. Movement sensor (1) for detecting the movement or presence of objects emitting thermal radiation, having
at least two infrared sensors (10) for detecting infrared radiation emitted within a detection zone (3) of the movement sensor (1),
an evaluation unit (15) connected to the infrared sensors (10) for evaluating the signals detected by the infrared sensors (10) and
a dome-shaped lens arrangement (7), which is arranged in front of the infrared sensors (10), having a plurality of lenses (8), which are arranged in concentric circles around the centre of the lens arrangement (7) and in each case image a certain partial region (4) of the detection zone (3) of the infrared sensors (10),
wherein the optical centres (9) of the lenses (8) are so displaced towards the centre of the lens arrangement (7) that the optical centre of at least one lens (8) located in an outer ring of the lens arrangement (7) is already located in the region of a lens (8) lying further inwardly and that the optical centres (9), considered in a plan view, are arranged in a uniform grid structure and correspondingly the spatial resolution of the movement sensor (1) is substantially constant over the entire detection zone (3).

2. Movement sensor according to claim 1,
**characterised in that**,
the partial regions (4) imaged by the lenses (8) on the infrared sensor (10) are arranged within the detection zone (3) distributed uniformly.

3. Movement sensor according to any preceding claim,
**characterised in that**,
the detection zone (3) is substantially rectangular.

4. Movement sensor according to claim 3,
**characterised in that**,
the detection zone (3) is substantially square.

5. Movement sensor according to any preceding claim,
**characterised in that**,
the lenses (8) of the lens arrangement (7) are formed by Fresnel lenses.

6. Movement sensor according to any preceding claim,
**characterised in that**,
the lens arrangement (7) is of an IR transparent plastic.

7. Movement sensor according to any preceding claim,
**characterised in that**,
the infrared sensor is formed by two infra-red-sensitive sensor elements (11, 12) arranged beside one another, wherein each lens (9) of the lens arrangement (7) images a respective section (5a, 5b) of a partial region (4) onto a sensor element (11, 12).

8. Movement sensor according to any preceding claim,
**characterised in that**,
the lens arrangement (7) is arranged in a calotte-shaped cover (6) of the infrared sensor (1).

9. Movement sensor according to any preceding claim,
**characterised in that**,
the lenses (8) are substantially trapeziform.

## Revendications

1. Capteur de déplacement (1) pour l'enregistrement du mouvement et/ou de la présence d'objets émettant du rayonnement de chaleur, présentant
au moins deux capteurs infrarouges (10) pour l'enregistrement d'un rayonnement infrarouge émis à l'intérieur d'une zone de détection (3) du capteur de déplacement (1),
une unité d'analyse (15) raccordée aux capteurs infrarouges (10) pour l'analyse des signaux enregistrés par les capteurs infrarouges (10) et
un agencement de lentilles (7) en forme de coupole, disposé devant les capteurs infrarouges (10), comprenant une pluralité de lentilles (8), qui sont disposées dans des cercles agencés de façon concentrique autour du centre de l'agencement de lentilles (7) et reproduisent à chaque fois l'image d'une zone partielle (4) définie de la zone de détection (3) sur les capteurs infrarouges (10),
les centres (9) optiques des lentilles (8) étant décalés en direction du centre de l'agencement de lentilles (7) de telle sorte que le centre optique d'au moins une lentille (8) se trouvant dans une bague extérieure de l'agencement de lentilles (7) se trouve déjà dans la zone d'une lentille (8) disposée davantage à l'intérieur et en ce que les centres (9) optiques sont disposés, vus en élévation, dans une structure de grille uniforme de sorte que la résolution dans l'espace du capteur de déplacement (1) est sensiblement constante sur l'ensemble de la zone de détection (3).

2. Capteur de déplacement selon la revendication 1,
**caractérisé en ce que**
les zones partielles (4) reproduites par les lentilles (8) sur le capteur infrarouge (10) sont disposées avec une répartition uniforme à l'intérieur de la zone de détection (3).

3. Capteur de déplacement selon l'une quelconque des revendications précédentes,
**caractérisé en ce que**
la zone de détection (3) est sensiblement rectangulaire.

4. Capteur de déplacement selon la revendication 3,
**caractérisé en ce que**
la zone de détection (3) est sensiblement carrée.

5. Capteur de déplacement selon l'une quelconque des revendications précédentes,
**caractérisé en ce que**
les lentilles (8) de l'agencement de lentilles (7) sont formées par des lentilles de Fresnel.

6. Capteur de déplacement selon l'une quelconque des revendications précédentes,
**caractérisé en ce que**
l'agencement de lentilles (7) est à base de plastique transparent aux infrarouges.

7. Capteur de déplacement selon l'une quelconque des revendications précédentes,
**caractérisé en ce que**
le capteur infrarouge est formé par deux éléments capteurs (11, 12) sensibles aux infrarouges et disposés l'un à côté de l'autre, chaque lentille (9) de l'agencement de lentilles (7) représentant à chaque fois un extrait (5a, 5b) d'une zone partielle (4) sur un élément capteur (11, 12).

8. Capteur de déplacement selon l'une quelconque des revendications précédentes,
**caractérisé en ce que**
l'agencement de lentilles (7) est disposé dans un recouvrement (6) en forme de calotte du capteur infrarouge (1).

9. Capteur de déplacement selon l'une quelconque des revendications précédentes,
**caractérisé en ce que**
les lentilles (8) sont sensiblement en forme de trapèze.
